# EUROPÄISCHE PATENTSCHRIFT

(11) **EP 3 721 103 B1**
(45) Veröffentlichungstag und Bekanntmachung des Hinweises auf die Patenterteilung: **23.03.2022**
(21) Anmeldenummer: 18829206.4
(22) Anmeldetag: 04.12.2018
(51) Int. Cl.: F16C 19/24, F16C 19/38, F16C 19/54, F03D 80/70

(54) **WÄLZLAGERANORDNUNG**
ROLLING BEARING ASSEMBLY
ASSEMBLAGE DE PALIERS ROULANTS

(30) Priorität: 06.12.2017 DE 102017128949
(43) Veröffentlichungstag der Anmeldung: 14.10.2020
(73) Patentinhaber: thyssenkrupp rothe Erde Germany GmbH, 44137 Dortmund (DE); thyssenkrupp AG, 45143 Essen (DE)
(72) Erfinder: FRONING, Stephan, 58239 Schwerte (DE); BOCHERT, Jan-Peter, 59609 Anröchte (DE)
(74) Vertreter: thyssenkrupp Intellectual Property GmbH
(86) Internationale Anmeldenummer: PCT/EP2018/083443
(87) Internationale Veröffentlichungsnummer: WO 2019/110566

(56) Entgegenhaltungen:
- DE-A1-102007 057 045
- DE-A1-102011 008 958
- DE-A1-102015 200 644
- DE-U1-202015 006 588
- US-A1- 2012 141 270

## Beschreibung

### Stand der Technik

Die vorliegende Erfindung betrifft eine Lageranordnung für eine Rotorwelle einer Windkraftanlage, bei der die Rotorwelle eine Drehung einer mit Rotorblättern versehenen Nabe an einen Generator überträgt, wobei die Lageranordnung ein nabenseitiges Wälzlager und ein generatorseitiges Wälzlager umfasst.

Die Rotorwelle einer Windkraftanlage überträgt während des Betriebs die Drehung der Rotorblätter an den Generator, wo die von der strömenden Luft angetriebene Drehung des Rotors in elektrische Energie umgewandelt wird. Die Rotorwelle kann dabei auf unterschiedliche Weise in der Gondel der Windkraftanlage gelagert sein. Nach einem ersten Lagerungskonzept sind zwei in Axialrichtung der Rotorwelle voneinander beabstandete Lagerstellen vorgesehen, wobei an einer Lagerstelle ein Loslager und an der anderen Lagerstelle ein Festlager vorgesehen ist (Fest-/Loslagerung). Nach einem zweiten Lagerungskonzept ist die Nabe mit dem Hohlrad eines Planetengetriebes oder im Fall von getriebelosen Anlagen direkt mit dem Rotor des Generators verschraubt. In beiden Fällen des zweiten Lagerungskonzepts wird zur Lagerung der Rotorwelle nur ein einziges Momentenlager benötigt, das bei geringer Bauhöhe Axialkräfte, Radialkräfte und Kippmomente aufnimmt und in die Gondel der Windkraftanlage einleitet. Die vorliegende Erfindung befasst sich mit dem vorstehend beschriebenen ersten Lagerungskonzept, bei dem zwei in Axialrichtung der Rotorwelle voneinander beabstandete Wälzlager vorgesehen sind, von denen eines als Loslager und das andere als Festlager ausgebildet ist.

Die Rotorwelle ist bei den aus dem Stand der Technik bekannten Fest-/Loslagerungen im Wesentlichen horizontal angeordnet und an zwei axial beabstandeten Stützstellen drehbar gelagert. Die beiden zughörigen Lager werden im Folgenden je nach ihrer Position als nabenseitiges und generatorseitiges Lager bezeichnet. Die drehbare Lagerung der Welle muss dabei zum einen das Eigengewicht der Welle selbst und das der Nabe und Rotorblätter tragen, zum anderen außerdem die durch den Wind verursachten Lasten aufnehmen. Beide Belastungen erzeugen in den Lagern Kippmomente und Kräfte in radialer und axialer Richtung, wobei das nabenseitige Lager dabei aufgrund des großen Gewichts der Rotorblätter deutlich größere Belastungen tragen muss. Darüber hinaus führen die Kräfte zu elastischen Verformungen der Rotorwelle. Die Wälzlager können dabei so ausgestaltet sein, dass diese elastischen Verformungen der Rotorwelle durch die Lager ausgeglichen werden.

Technische Realisierungen solcher Lagerungen der Rotorwelle sind aus dem Stand der Technik bekannt.

US 2012/0141270 A1 beschreibt eine Windenergieanlage mit einer an einer Eingangswelle befestigten Rotornabe. Die Eingangswelle erstreckt sich durch zwei Lagergehäuse; ein vorderes Gehäuse, welches ein Festlager enthält, und ein hinteres Gehäuse, welches ein Loslager für die Welle enthält. An dem Ende der Eingangswelle ist eine Scheibe angeordnet, die die Eingangswelle mit dem Hohlrad eines Planetengetriebes verbindet.

Aus DE 10 2011 008 958 A1 ist ein dreireihiges Rollenlager bekannt, welches als Rotorlager bei Windkraftanlagen zum Einsatz kommt. DE 20 2015 006 588 U1 beschreibt ein weiteres dreireihiges Rollenlager. Aus DE 10 2007 057 045 A1 ist ein spielfreies Radiallager und aus DE 10 2015 200 644 A1 ist ein Wälzlager mit einem Bolzenkäfig bekannt.

In der Druckschrift EP 2 871 376 B1 wird eine Lagerung für eine Strömungsmaschine, beispielsweise eine Windkraftanlage beschrieben, bei der die Welle mittels eines Fest- und eines Loslagers drehbar gelagert ist. Das Festlager besteht dabei aus zwei selbstausrichtenden Kontaktlagern, bei denen jeweils mehrere tonnenförmige Wälzkörper mit einer Neigung gegenüber der Drehachse angeordnet sind und zwischen zwei gekrümmten Laufflächen abrollen. In einem axialen Abstand zum Festlager ist das Loslager angeordnet, bei dem ein weiterer Satz Rollenelemente zwischen zwei gekrümmten Laufflächen abrollt. Durch die selbstausrichtenden Toroidalrollenlager wird eine Lageranordnung erzeugt, die Durchbiegungen und Fluchtungsfehler der Welle in einem hohen Maße toleriert. Ein Nachteil dieser Anordnung besteht allerdings umgekehrt darin, dass eine solche nachgiebige Lagerungen lastbedingten Verformungen der Welle nur geringen Widerstand entgegensetzt. Die Verformungen der Welle müssen daher vom Generator aufgenommen werden. Weiterhin führt der Einsatz eines Toroidalrollenlagers als Loslager dazu, dass axiale Bewegungen der Welle, z.B. aufgrund von Wärmeausdehnung nur begrenzt aufgenommen werden können.

### Offenbarung der Erfindung

Der vorliegenden Erfindung liegt die Aufgabe zugrunde, die ungleichförmige Lastverteilung auf das nabenseitige und das generatorseitige Lager durch eine passende Ausgestaltung der Lager aufzufangen und die axiale Dehnung der Welle gering zu halten. Eine technische Randbedingung besteht darin, das Lager für einen Einsatzzeitraum von mehr als 20 Jahren betriebssicher auszulegen und zu diesem Zweck die Pressungen der Kontakte zwischen Wälzkörpern und Laufbahnen gering zu halten (insbesondere kleiner als 1500 MPa für Betriebslasten). Eine wirtschaftliche und logistische Randbedingung besteht darin, die Größe und das Gewicht der Lager zu begrenzen.

Gelöst wird diese Aufgabe durch eine Lageranordnung für eine Rotorwelle einer Windkraftanlage, bei der die Rotorwelle eine Drehung einer mit Rotorblättern versehenen Nabe an einen Generator überträgt, wobei die Lageranordnung ein nabenseitiges Wälzlager und ein generatorseitiges Wälzlager umfasst, wobei das nabenseitige Wälzlager als Radialrollenlager ausgebildet ist und das generatorseitige Wälzlager als dreireihige Rollendrehverbindung ausgebildet ist.

Es hat sich überraschenderweise herausgestellt, dass die erfindungsgemäße Kombination dieser beiden Lagerformen eine optimale Anpassung an die jeweilige spezifische Belastungssituation auf der Nabenseite und der Generatorseite ermöglicht. Das nabenseitige Wälzlager trägt vorrangig die Gewichtskräfte der Nabe und der Rotorblätter und ist dadurch starken Radialkräften ausgesetzt. Um diese Kräfte aufzunehmen und dabei gleichzeitig die Pressung der Kontakte zwischen Wälzkörpern und Laufbahnen gering zu halten, ist eine große Wälzkörperlänge vorteilhaft. Dadurch verteilen sich die zu übertragenden Radialkräfte auf eine entsprechend große Kontaktzone woraus sich eine geringere Flächenpressung ergibt. Das generatorseitige Wälzlager muss dagegen gegenüber dem nabenseitigen Lager geringere Radialkräfte aufnehmen ist aber dafür zusätzlichen axialen Belastungen ausgesetzt und muss diese an die Anschlusskonstruktion übertragen und so das generatorseitige Ende der Welle bezüglich der axialen Position fixieren. Durch den Überhang der Nabe gegenüber der nabenseitigen Stützstelle erzeugen die Gewichtskräfte von Nabe und Rotorblättern und auch die Windkräfte ein Kippmoment, das von den Lagern aufgenommen werden muss und zusätzlich zu den genannten elastischen Verformungen führt.

Bei der erfindungsgemäßen Lageranordnung wird durch das Zusammenspiel von naben- und generatorseitigem Lager eine Toleranz gegenüber bestimmten Bewegungen der Welle erzeugt, während andere Bewegungen effektiv unterdrückt werden. So ist das nabenseitige Radiallager fähig, axiale Bewegungen der Welle zuzulassen, während z.B. durch Biegemomente hervorgerufene radiale Verschiebungen vom Radiallager unterbunden werden und die entsprechenden Belastungen stattdessen über die Lager in die Anschlusskonstruktion eingeleitet werden. Die generatorseitige Rollendrehverbindung gibt sowohl radiale als auch axiale Lasten an die Anschlusskonstruktion weiter, so dass die Welle auf diese Weise am generatorseitigen Ende in axialer Richtung fixiert wird. Damit das naben- und das generatorseitige Lager in solcher Weise vorteilhaft zusammenwirken können, ist es notwendig, dass die Aufnahmefähigkeiten beider Lager für die Bewegungen der Welle aufeinander abgestimmt sind. Mit der oben zitierten Druckschrift EP 2 871 376 B1 als Ausgangspunkt würde beispielsweise eine bloße Ersetzung des Loslagers durch ein Zylinderrollenlager eher zu einer Verschlechterung des Zusammenspiels zwischen Los- und Festlager führen, da die hohe Flexibilität des Festlagers Bewegungen der Welle erlaubt, die beim Loslager zu Schiefstellungen führen, die von einem Zylinderrollenlager nicht aufgenommen werden können und zu hohen Pressungen oder sogar sogenannten "Kantenläufern" führen können. Dies führt zu unakzeptabel hohem Verschleiß. Daher ist es ausdrücklich das erfindungsgemäße Zusammenwirken der beiden Lager, das den gewünschten technischen Effekt (Tolerierung gewisser Bewegungen der Rotorwelle bei gleichzeitiger Sicherstellung einer für Rotorlager von Windkraftanlagen geforderten Lebensdauererwartung von mindestens 20 Jahren) erzielt.

Um die Anordnung der Wälzkörper und die sich daraus ergebenden radialen und axialen Belastungsverhältnisse zu beschreiben, ist es zweckmäßig, die Druckwinkel der Wälzlager zu betrachten. Jeder Wälzkörper steht mit den Laufbahnen beider Lagerringe an mindestens zwei gegenüberliegenden Punkten in Kontakt. Durch diese beiden Punkte wird eine Drucklinie festgelegt, also die Linie, entlang derer der Wälzkörper Druckkräfte zwischen den beiden Ringen überträgt. Der Winkel, den die Drucklinie mit der Radialebene des Lagers einschließt wird als Druckwinkel bezeichnet und liegt für ein reines Radiallager in der Nähe von 0° und für ein reines Axiallager in der Nähe von 90°. Für das erfindungsgemäße nabenseitige Wälzlager ist die Übertragung von radialen Kräften entscheidend, so dass die Druckwinkel bei diesem Lager möglichst klein, mindestens aber kleiner als 45° gewählt sind. Das generatorseitige Lager muss dagegen auch stärkere Axialkräfte aufnehmen, was erfindungsgemäß durch eine dreireihige Rollendrehverbindung erreicht wird. Bei der Rollendrehverbindung werden die axialen und radialen Kräfte jeweils von verschiedenen Wälzkörperreihen aufgenommen. Die Drucklinien radial angeordneten Wälzkörperreihe zeigen dabei im Wesentlichen radial nach außen und übertragen dementsprechend ausschließlich radiale Kräfte. Die Drucklinien der axial angeordneten Wälzkörperreihen sind dagegen parallel zur Drehachse und übertragen ausschließlich die axialen Kräfte. Die Ausführungsformen des nabenseitigen und des generatorseitigen Lagers, die im Folgenden beschrieben werden, lassen sich jeweils miteinander kombinieren.

Gemäß einer bevorzugten Ausführungsform der Erfindung ist das generatorseitige Wälzlager als dreireihige Rollendrehverbindung ausgebildet. Hier werden die radialen und axialen Kräfte jeweils von verschiedenen Rollen übertragen. Bei zwei Reihen sind dabei die Wälzkörper so angeordnet, dass die zugehörigen Drucklinien im Wesentlichen senkrecht auf der Radialebene stehen (Druckwinkel 90°), während die Drucklinien der Wälzkörper der dritten Reihe in der Radialebene liegen (Druckwinkel 0°). Die erstgenannten Reihen mit den senkrecht zur Radialebene stehenden Drucklinien nehmen dabei in optimaler Weise axiale Kräfte auf, während die dritte Reihe mit den in Radialrichtung zeigenden Drucklinien Radialkräfte überträgt. Diese Lageranordnung zeichnet sich durch eine relativ geringe Steifigkeit und hohe Belastbarkeit aus.

Gemäß einer weiteren bevorzugten Ausführungsform der Erfindung ist das nabenseitige Wälzlager als Zylinderrollenlager ausgebildet. Diese Lagerform ist vorteilhafterweise besonders geeignet, die hohen radialen Lasten zu tragen und darüber hinaus fähig, axiale Verschiebungen, z.B. in Form einer durch Temperaturänderung verursachten Ausdehnung der Welle aufzunehmen. Des Weiteren weisen zylinderförmige Wälzkörper insbesondere gegenüber balligen Wälzkörperformen eine geringere Schlupfanfälligkeit auf, was besonders bei hohen Lasten den dadurch verursachten Verschleiß vermindert.

Gemäß einer bevorzugten Ausführungsform der Erfindung ist das nabenseitige Wälzlager als mehrreihiges Radialrollenlager ausgebildet. Die Rollen der verschiedenen Reihen weisen dabei Drucklinien auf, die im Wesentlichen in der Radialebene liegen, so dass Radialkräfte in optimaler Weise übertragen werden. Um starke Pressungen zwischen den Wälzkörpern und den Laufbahnen zu vermeiden, ist es erforderlich, dass sich zwischen ihnen möglichst große Kontaktflächen ausbilden. Anstatt solche Kontaktflächen durch entsprechend lange Wälzkörper zu realisieren, werden bei der erfindungsgemäßen Ausführungsform mehrreihige Lager eingesetzt. Diese weisen ebenfalls eine, über mehrere Reihen verteilte, große Gesamtkontaktfläche auf, besitzen aber darüber hinaus den Vorteil, dass die effektive Schiefstellung der Wälzkörper geringer ausfällt. Dadurch ist es vorteilhaft möglich, die mit Schiefstellungen verbundenen erhöhten lokalen Kontaktpressungen zu vermeiden, so dass der Materialverschleiß reduziert und die Lebensdauer erhöht wird. Gemäß einer besonders bevorzugten Ausführungsform ist das nabenseitige Wälzlager insbesondere als doppelreihiges Rollenlager ausgebildet.

Gemäß einer bevorzugten Ausführungsform werden die Wälzkörper mit Hilfe eines geschlossenen Käfigs geführt. Die nachfolgenden Beschreibungen dieser Käfigführungen stellen gleichermaßen mögliche Ausführungsformen des nabenseitigen Wälzlagers und des generatorseitigen Wälzlagers dar.

Gemäß einer bevorzugten Ausführungsform werden die Wälzkörper in Fenstern des geschlossenen Käfigs geführt. Durch die Führung werden gleichmäßige Abstände zwischen benachbarten Wälzkörpern gewährleistet, so dass auf diese Weise insbesondere verhindert wird, dass sich benachbarte Wälzkörper berühren. Darüber hinaus wird dadurch vorteilhafterweise eine gleichförmige Verteilung der Belastung erreicht. Wälzkörper, die beim Umlauf zeitweise keiner Belastung unterliegen werden in den Käfigfenstern mitgeführt, ohne dass es zu Gleitbewegungen oder Schiefstellungen kommt.

Gemäß einer weiteren bevorzugten Ausführungsform werden die Wälzkörper in einem Bolzenkäfig geführt. Dazu weisen die Wälzkörper Bohrungen auf, in die seitlich am Käfig befestigte Bolzen gefügt sind, so dass die Lage und Ausrichtung der Wälzkörper in kontrollierter Weise mit engem Spiel geführt wird. Dadurch lassen sich vorteilhafterweise die Wälzkörper dicht aufeinanderfolgend anordnen, ohne dass die Gefahr besteht, dass sie sich beim Umlauf gegenseitig berühren oder blockieren.

Bei den mehrreihigen Ausführungsformen ist es erfindungsgemäß bevorzugt möglich, dass die Wälzkörper benachbarter Reihen durch einen Mittelsteg des Käfigs getrennt sind. Dadurch wird vorteilhafterweise verhindert, dass sich die Wälzkörper an ihren Stirnflächen berühren oder durch Schiefstellungen gegenseitig blockieren.

Gemäß einer weiteren bevorzugten Ausführungsform der Erfindung weisen die generatorseitigen Wälzlager und/oder die nabenseitigen Wälzlager induktiv gehärtete Laufbahnen auf. Da sowohl das nabenseitige als auch das generatorseitige Lager großen Lasten ausgesetzt sind, kommt es beim Abrollen der Wälzkörper zu zyklischen elastischen Verformungen der Wälzkörper und Laufbahnen. Um zu verhindern, dass über diese elastischen Prozesse hinaus plastische Verformungsarbeit geleistet wird, die auf Dauer zur Ermüdung und schließlich zu Schäden des Materials führt, werden die Laufbahnen mit einem induktiven Verfahren gehärtet. Dabei wird zum einen die plastische Verformbarkeit der Laufbahnen stark herabgesetzt und zum anderen Abrieb vermindert, der das Material verschleißen lässt. Induktive Härungsverfahren haben dabei den Vorteil, dass die Wärme direkt im Material entsteht und nicht erst durch Wärmeleitung ausgehend von der Oberfläche in das Material eindringen muss. Des Weiteren lässt sich auf diesem Weg eine starke Erwärmung in sehr kurzer Zeit durchführen.

Gemäß einer weiteren bevorzugten Ausführungsform weist das generatorseitige Wälzlager integrierte Lagerspaltdichtungen auf. Dadurch ist es vorteilhafterweise möglich, dass zum einen ein Austritt von Schmiermittel aus dem Lager vermindert wird und zum anderen durch die Dichtung verhindert wird, dass von außen Verschmutzungen und Fremdkörper in das Lager gelangen und dort zu Schäden führen.

Gemäß einer weiteren bevorzugten Ausführungsform umfasst die Lageranordnung zusätzlich mindestens ein nabenseitiges hydrostatisches Element und insbesondere ein Gleitlager. Die aufgeführten Ausführungsformen der erfindungsgemäßen Lageranordnung lassen sich mit hydrostatischen Elementen kombinieren, die das nabenseitige Lager zusätzlich unterstützen und eine Reduzierung der nabenseitigen Radialkräfte bewirken. Eine solche Reduzierung kann zum Beispiel von einem hydrostatischen Gleitlager geleistet werden. Bei diesem Lagertyp sind die beiden drehbar zueinander gelagerten Ringe durch einen Flüssigkeitsfilm getrennt, so dass die Ringe bei der Drehung mit geringer Reibung gegeneinander gleiten. Im Gegensatz zu hydrodynamischen Lagern oder geschmierten Wälzlagern ist der, die Lagerringe trennende Flüssigkeitsfilm permanent vorhanden und kann auch bei geringen Drehzahlen oder bei Stillstand Kräfte zwischen den Lagerringen übertragen, so dass der Verschleiß des Wälzlagers reduziert und die Lebensdauer der Lageranordnung erhöht wird.

Gemäß einer bevorzugten Ausführungsform der Erfindung ist das nabenseitige Wälzlager als Loslager und das generatorseitige Wälzlager als Festlager ausgebildet.

### Kurze Beschreibung der Zeichnungen

- **Figur 1**: zeigt schematisch eine Lageranordnung für die Rotorwelle einer Windkraftanlage gemäß einer beispielhaften Ausführungsform der vorliegenden Erfindung.
- **Figur 2**: zeigt schematisch ein nabenseitiges Wälzlager und ein generatorseitiges Wälzlager gemäß einer beispielhaften Ausführungsform der vorliegenden Erfindung.

### Ausführungsformen der Erfindung

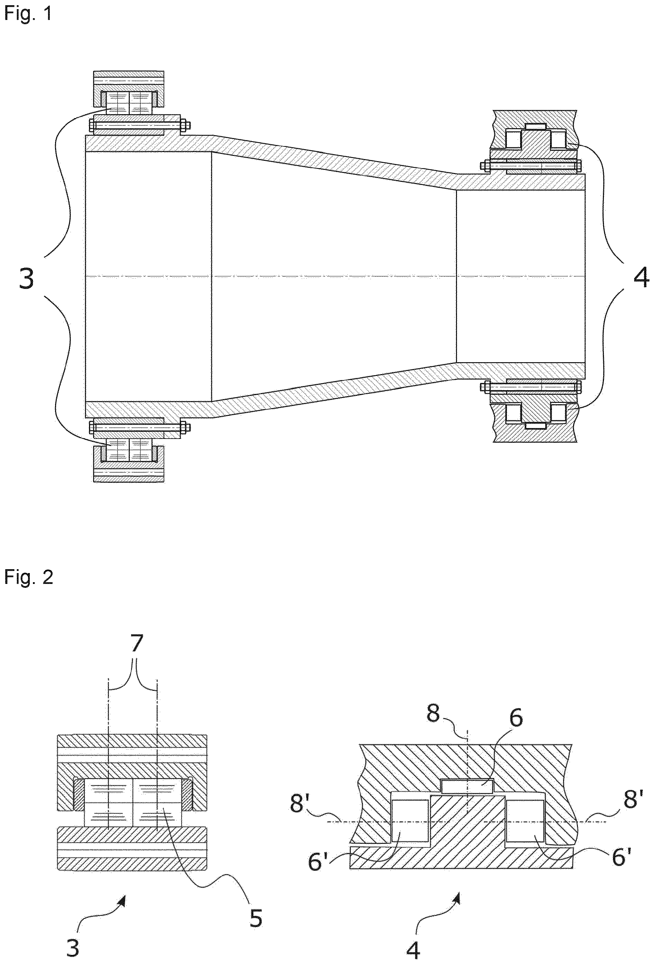

In **Figur 1** ist schematisch eine Lageranordnung für die Rotorwelle einer Windkraftanlage gemäß einer möglichen Ausführung der Erfindung in einer radialen Schnittdarstellung abgebildet. In der Windkraftanlage ist die Nabe mit dem Generator über eine Rotorwelle verbunden, wodurch die Rotation der Nabe an den Generator übertragen und dort in elektrische Energie umgewandelt wird. Die Welle ist dabei erfindungsgemäß mittels zweier Wälzlageranordnungen 3 und 4 drehbar gelagert. Entsprechend ihrer Position relativ zu Nabe und Generator werden die beiden Wälzlageranordnungen 3 und 4 als nabenseitiges Lager 3 und als generatorseitiges Lager 4 bezeichnet. Die Nabenseite entspricht in der Zeichnung der linken und die Generatorseite der rechten Seite.

Das nabenseitige Lager 3 wird in dieser Ausführungsform durch zwei Reihen von Zylinderrollen 5 gebildet, die bei der Drehung zwischen den beiden Lagerringen abrollen. Die zylinderförmigen Wälzkörper übertragen dabei die Kräfte zwischen den beiden Lagerringen im Wesentlichen in radialer Richtung und sind somit optimal geeignet, die hohen Radialkräfte aufzunehmen, die vom Gewicht der Nabe und der Rotorblätter erzeugt werden.

Das generatorseitige Wälzlager 4 wird in dieser Ausführungsform durch eine dreireihige Rollendrehverbindung gebildet. Die Rollendrehverbindung besteht aus drei Reihen von zylinderförmigen Wälzkörpern, von denen eine Wälzkörperreihe Kräfte in radialer Richtung überträgt, während zwei weitere Wälzkörperreihen Kräfte in axialer Richtung übertragen.

In **Figur 2** ist schematisch ein nabenseitiges Wälzlager 3 und ein generatorseitiges Wälzlager 4 gemäß einer möglichen Ausführung der Erfindung dargestellt. Beide Wälzlager 3 und 4 sind in einem radialen Schnitt dargestellt, wobei im Vergleich zu Figur 1 nur jeweils die obere der beiden Schnittflächen abgebildet ist und die unteren Schnittflächen symmetrisch zur Drehachse gespiegelt an der gegenüberliegenden Position des jeweiligen Wälzlagers liegen.

Das nabenseitige Lager 3 wird in dieser Ausführungsform durch zwei Reihen von Zylinderrollen 5 gebildet, die bei der Drehung zwischen den beiden Lagerringen abrollen. Dabei bildet jede Rolle 5 mit den beiden Laufbahnen im unbelasteten Zustand an zwei, einander gegenüberliegenden Stellen Linienkontakte aus. Die Belastung wird durch einen Spannungsverlauf im Innern des Wälzkörpers von einem Kontakt zum gegenüberliegenden Kontakt übertragen. Durch die Lage und Form der Wälzkörper 5 ist das dargestellte Lager 3 im Wesentlichen ein reines Radiallager, so dass die Spannungen zwischen den Kontakten im Wesentlichen radial verlaufen und die zughörigen Drucklinien 7 ebenfalls in radiale Richtung zeigen.

Das generatorseitige Wälzlager 4 wird in dieser Ausführungsform durch eine Rollendrehverbindung 4 gebildet. Hier wird die Kraftübertragung zwischen den beiden Lagerringen durch drei Reihen von zylinderförmigen Wälzkörpern 6, 6' geleistet. Bei der ersten Reihe sind die zylinderförmigen Wälzkörper 6 parallel zur Drehachse angeordnet und rollen zwischen zwei radial beabstandeten Laufflächen der beiden Lagerringe ab. Zwei weitere Reihen von zylinderförmigen Wälzkörpern 6' sind dagegen senkrecht zur Drehachse angeordnet und laufen jeweils auf zwei axial beabstandeten Laufflächen der beiden Lagerringe ab. In der Zeichnung sind zusätzlich die Drucklinien 8, 8' aller Wälzkörper 6, 6' abgebildet. Die Drucklinien 8 der Wälzkörper 6 der ersten Reihe zeigen in radiale Richtung und repräsentieren die Hauptübertragungsrichtung der ersten Wälzkörperreihe 6, die radiale Kräfte zwischen den beiden Lagerringen überträgt. Die Drucklinien 8' der beiden anderen Wälzkörperreihen verlaufen dagegen parallel zur Drehachse und repräsentieren die Hauptübertragungsrichtung der Wälzkörper 6'. Durch die Kombination von rein axialen und rein radialen Drucklinien 8, 8' kann die Rollendrehverbindung 4 vorteilhafterweise Kräfte in beide Richtung aufnehmen und ist damit nicht nur fähig das Gewicht der Rotorwelle zu tragen, sondern fängt auch die axialen Kräfte der Welle ab und verhindert so, dass diese auf den Generator übertragen werden.

### BEZUGSZEICHENLISTE

- 3: nabenseitiges Wälzlager
- 4: generatorseitiges Wälzlager
- 5: Wälzkörper des nabenseitigen Wälzlagers
- 6: radial angeordnete Wälzkörper des generatorseitigen Wälzlagers
- 6': axial angeordnete Wälzkörper des generatorseitigen Wälzlagers
- 7: Drucklinien des nabenseitigen Wälzlagers
- 8: radiale Drucklinien des generatorseitigen Wälzlagers
- 8': axiale Drucklinien des generatorseitigen Wälzlagers

## Patentansprüche

1. Lageranordnung für eine Rotorwelle einer Windkraftanlage, bei der die Rotorwelle eine Drehung einer mit Rotorblättern versehenen Nabe an einen Generator überträgt, wobei die Lageranordnung ein nabenseitiges Wälzlager (3) und ein generatorseitiges Wälzlager (4) umfasst, wobei das nabenseitige Wälzlager (3) als Radialrollenlager ausgebildet ist **dadurch gekennzeichnet, dass** das generatorseitige Wälzlager (4) als dreireihige Rollendrehverbindung ausgebildet ist.

2. Lageranordnung nach einem der vorhergehenden Ansprüche, wobei das nabenseitige Wälzlager (3) als mehrreihiges Rollenlager ausgebildet ist.

3. Lageranordnung nach einem der vorhergehenden Ansprüche, wobei das nabenseitige Wälzlager (3) als doppelreihiges Rollenlager ausgebildet ist.

4. Lageranordnung nach einem der vorhergehenden Ansprüche, wobei das nabenseitige Wälzlager (3) als Zylinderrollenlager ausgebildet ist.

5. Lageranordnung nach einem der vorhergehenden Ansprüche, wobei das nabenseitige Wälzlagers (3) einen geschlossenen Käfig zur Führung einer Mehrzahl von Wälzkörpern aufweist.

6. Lageranordnung nach Anspruch 5, wobei die Wälzkörper (5) des nabenseitigen Wälzlagers (3) in Fenstern des Käfigs geführt sind.

7. Lageranordnung nach Anspruch 5, wobei die Wälzkörper (5) des nabenseitigen Wälzlagers (3) in mehreren Reihen angeordnet sind und die Reihen im Käfig durch einen Mittelsteg getrennt sind.

8. Lageranordnung an Anspruch 5, wobei die Wälzkörper (5) des nabenseitigen Wälzlagers (3) in einem Bolzenkäfig geführt sind.

9. Lageranordnung nach einem der vorhergehenden Ansprüche, wobei das generatorseitige Wälzlagers (4) einen geschlossenen Käfig zur Führung einer Mehrzahl von Wälzkörpern aufweist.

10. Lageranordnung nach Anspruch 9, wobei die Wälzkörper (6, 6') des generatorseitigen Wälzlagers (4) in Fenstern des Käfigs geführt sind.

11. Lageranordnung an Anspruch 9, wobei die Wälzkörper (6, 6') des generatorseitigen Wälzlagers (4) in einem Bolzenkäfig geführt sind.

12. Lageranordnung nach einem der vorhergehenden Ansprüche, wobei das generatorseitige Wälzlager (4) induktiv gehärtete Laufbahnen aufweist und/oder das nabenseitige Wälzlager (3) induktiv gehärtete Laufbahnen aufweist.

13. Lageranordnung nach einem der vorhergehenden Ansprüche, wobei das generatorseitige Wälzlager (4) integrierte Lagerspaltdichtungen aufweist.

14. Lageranordnung nach einem der vorhergehenden Ansprüche, wobei die Lageranordnung zusätzlich mindestens ein nabenseitiges hydrostatisches Element und insbesondere ein Gleitlager umfasst.

15. Lageranordnung nach einem der vorhergehenden Ansprüche, wobei das nabenseitige Wälzlager (3) als Loslager und das generatorseitige Wälzlager (4) als Festlager ausgebildet ist.

## Claims

1. A bearing arrangement for a rotor shaft of a wind turbine, in which the rotor shaft transfers a rotation of a hub provided with rotor blades to a generator, wherein the bearing arrangement comprises a hub-side rolling bearing (3) and a generator-side rolling bearing (4), wherein the hub-side rolling bearing (3) is formed as a radial roller bearing, **characterized in that** the generator-side rolling bearing (4) is formed as a three-row roller rotary connection.

2. The bearing arrangement as claimed in one of the preceding claims, wherein the hub-side rolling bearing (3) is formed as a multi-row roller bearing.

3. The bearing arrangement as claimed in one of the preceding claims, wherein the hub-side rolling bearing (3) is formed as a double-row roller bearing.

4. The bearing arrangement as claimed in one of the preceding claims, wherein the hub-side rolling bearing (3) is formed as a cylindrical roller bearing.

5. The bearing arrangement as claimed in one of the preceding claims, wherein the hub-side rolling bearing (3) has a closed cage for guiding a plurality of rolling elements.

6. The bearing arrangement as claimed in claim 5, wherein the rolling elements (5) of the hub-side rolling bearing (3) are guided in windows of the cage.

7. The bearing arrangement as claimed in claim 5, wherein the rolling elements (5) of the hub-side rolling bearing (3) are arranged in multiple rows, and the rows in the cage are separated by a central web.

8. The bearing arrangement as claimed in claim 5, wherein the rolling elements (5) of the hub-side rolling bearing (3) are guided in a pin cage.

9. The bearing arrangement as claimed in one of the preceding claims, wherein the generator-side rolling bearing (4) has a closed cage for guiding a multiplicity of rolling elements.

10. The bearing arrangement as claimed in claim 9, wherein the rolling elements (6, 6') of the generator-side rolling bearing (4) are guided in windows of the cage.

11. The bearing arrangement as claimed in claim 9, wherein the rolling elements (6, 6') of the generator-side rolling bearing (4) are guided in a pin cage.

12. The bearing arrangement as claimed in one of the preceding claims, wherein the generator-side rolling bearing (4) has inductively hardened raceways and/or the hub-side rolling bearing (3) has inductively hardened raceways.

13. The bearing arrangement as claimed in one of the preceding claims, wherein the generator-side rolling bearing (4) has integrated bearing gap seals.

14. The bearing arrangement as claimed in one of the preceding claims, wherein the bearing arrangement additionally comprises at least one hub-side hydrostatic element and in particular a sliding bearing.

15. The bearing arrangement as claimed in one of the preceding claims, wherein the hub-side rolling bearing (3) is formed as a floating bearing and the generator-side rolling bearing (4) as a fixed bearing.

## Revendications

1. Ensemble palier pour un arbre de rotor d'une éolienne, dans lequel l'arbre de rotor transmet à un générateur une rotation d'un moyeu muni de pales de rotor, l'ensemble palier comprenant un palier à roulements côté moyeu (3) et un palier à roulements côté générateur (4), le palier à roulements côté moyeu (3) étant réalisé sous la forme d'un palier à roulements radiaux,
**caractérisé en ce que** le palier à roulements côté générateur (4) est réalisé sous la forme d'un assemblage rotatif de rouleaux à trois rangées.

2. Ensemble palier selon l'une quelconque des revendications précédentes, dans lequel le palier à roulements côté moyeu (3) est réalisé sous la forme d'un palier à rouleaux à plusieurs rangées.

3. Ensemble palier selon l'une quelconque des revendications précédentes, dans lequel le palier à roulements côté moyeu (3) est réalisé sous la forme d'un palier à rouleaux à deux rangées.

4. Ensemble palier selon l'une quelconque des revendications précédentes, dans lequel le palier à roulements côté moyeu (3) est réalisé sous la forme d'un palier à rouleaux cylindriques.

5. Ensemble palier selon l'une quelconque des revendications précédentes, dans lequel le palier à roulements côté moyeu (3) présente une cage fermée pour guider une pluralité d'éléments roulants.

6. Ensemble palier selon la revendication 5, dans lequel les éléments roulants (5) du palier à roulements côté moyeu (3) sont guidés dans des fenêtres de la cage.

7. Ensemble palier selon la revendication 5, dans lequel les éléments roulants (5) du palier à roulements côté moyeu (3) sont disposés sur plusieurs rangées et les rangées dans la cage sont séparées par une entretoise centrale.

8. Ensemble palier selon la revendication 5, dans lequel les éléments roulants (5) du palier à roulements côté moyeu (3) sont guidés dans une cage à axes.

9. Ensemble palier selon l'une quelconque des revendications précédentes, dans lequel le palier à roulements côté générateur (4) présente une cage fermée pour guider une pluralité d'éléments roulants.

10. Ensemble palier selon la revendication 9, dans lequel les éléments roulants (6, 6') du palier à roulements côté générateur (4) sont guidés dans des fenêtres de la cage.

11. Ensemble palier selon la revendication 9, dans lequel les éléments roulants (6, 6') du palier à roulements côté générateur (4) sont guidés dans une cage à axes.

12. Ensemble palier selon l'une quelconque des revendications précédentes, dans lequel le palier à roulements côté générateur (4) présente des voies de roulement trempées par induction, et/ou le palier à roulements côté moyeu (3) présente des voies de roulement trempées par induction.

13. Ensemble palier selon l'une quelconque des revendications précédentes, dans lequel le palier à roulements côté générateur (4) présente des joints de fente de palier intégrés.

14. Ensemble palier selon l'une quelconque des revendications précédentes, l'ensemble palier comprenant en outre au moins un élément hydrostatique côté moyeu et en particulier un palier lisse.

15. Ensemble palier selon l'une quelconque des revendications précédentes, dans lequel le palier à roulements côté moyeu (3) est réalisé sous la forme d'un palier libre et le palier à roulements côté générateur (4) est réalisé sous la forme d'un palier fixe.
